(19) Europäisches Patentamt / European Patent Office / Office européen des brevets

(11) **EP 2 875 882 A1**

(12) **EUROPEAN PATENT APPLICATION**

(43) Date of publication:
**27.05.2015 Bulletin 2015/22**

(51) Int Cl.:
**B22F 1/00** (2006.01)     **B22F 9/14** (2006.01)

(21) Application number: **14189896.5**

(22) Date of filing: **22.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.11.2013  KR 20130142502**

(71) Applicant: **Dr Axion Co., Ltd.**
**Busan 619-961 (KR)**

(72) Inventor: **Park, Jeong Wook**
**689-779 Ulsan (KR)**

(74) Representative: **Strässle, Simon**
**Isler & Pedrazzini AG**
**Postfach 1772**
**8027 Zürich (CH)**

(54)  **Method for producing nanopowders using electrical wire explosion**

(57)    A method for producing nanopowders using electrical wire explosion is provided, which includes forming a wire in a helical spring structure, supplying the formed wire to a supplier, electrically exploring the wire through applying high voltage to the wire after supplying the wire that is supplied to the supplier into a chamber, and collecting nanopowders generated through explosion of the wire, wherein the wire formed in a helical spring structure has a pitch of 0.4 to 0.8 mm, a number of wind of 10 to 13, and a diameter of 1 to 2 mm.

FIG. 1

EP 2 875 882 A1

Printed by Jouve, 75001 PARIS (FR)

**Description**

**CROSS-REFERENCE TO RELATED APPLICATION**

This application is based on and claims priority from Korean Patent Application No. 10-2013-0142502 filed on November 21, 2013 in the Korean Intellectual Property Office, the disclosure of which is incorporated herein in its entirety by reference.

**BACKGROUND OF THE INVENTION**

**Field of the Invention**

The present invention relates to a method for producing nanopowders using electrical wire explosion, and more particularly, to a method for producing nanopowders using electrical wire explosion, which can improve the production capacity of nanopowders through supply of a wire in a helical spring structure.

**Background of the Related Art**

Generally, a method for producing single metal powders includes an atomization method, a liquid phase reduction method, and a method using plasma.
However, according to the atomization method, it is unable to produce nano-sized powders, but powders having a size of about 50 $\mu$m can be produced.
The liquid phase reduction method can produce several noble metals with a nano size, but has the disadvantage that it is unable to be applied to normal metal powders.
The plasma method has the problem that it has large power consumption in comparison to the production, and requires a separate device that prevents oxidization when the powders are collected. Thus, according to the method in the related art, it is unable to stably produce metal powders of a nano size.
In order to solve the problems, Registered Patent No. 10-0394390 discloses "Method and apparatus for producing metal nanopowders by electrical wire explosion".
The technology in the related art as described above includes supplying a wire from a wire supply device into a reactor, measuring a length of wire explosion through a measurement roller in the wire supply device, generating a spark gap driving signal as an explosion length measurement signal, changing a battery until the driving signal is supplied to a driving electrode of a spark gap, supplying high voltage of the battery that is charged with the spark gap driving signal to a high-voltage electrode of the reactor through an insulator between a high-voltage electrode and a low-voltage electrode of the spark gap, obtaining nano metal powders through explosion of the wire that is supplied into the reactor with the high voltage, and collecting the nano metal powders at accurate oxygen pressure.
However, although the technology in the related art is composed of a multistage buffer cyclone, a filter, and a hopper, and thus has a complicated configuration, yield of the produced powders is only 50 to 60%.

**SUMMARY OF THE INVENTION**

Accordingly, the present invention has been made in view of the above-mentioned problems occurring in the related art, and it is an object of the present invention to provide a method for producing nanopowders using electrical wire explosion, which can increase the production capacity of nanopowders up to several to several tens of times through supply of a wire, which is supplied in a straight line shape in the related art, in a helical spring structure.
To accomplish the above object, according to an aspect of the present invention, there is provided a method for producing nanopowders using electrical wire explosion, which includes forming a wire in a helical spring structure; supplying the formed wire to a supplier; electrically exploring the wire through applying high voltage to the wire after supplying the wire that is supplied to the supplier into a chamber; and collecting nanopowders generated through explosion of the wire, wherein the wire formed in a helical spring structure has a pitch of 0.4 to 0.8 mm, a number of wind of 10 to 13, and a diameter of 1 to 2 mm.
According to another aspect of the present invention, there is provided a method for producing nanopowders using electrical wire explosion, which includes supplying a wire to a supplier; forming the wire that is supplied to the supplier in a helical spring structure, supplying the formed wire into a chamber, and electrically exploring the wire through applying of high voltage to the formed wire after supplying the wire that is supplied to the supplier into a chamber; and collecting nanopowders generated through explosion of the wire, wherein the wire formed in a helical spring structure has a pitch of 0.4 to 0.8 mm, a number of wind of 10 to 13, and a diameter of 1 to 2 mm.
An end portion of the wire that is formed in a helical spring structure may be formed in any one of close end, open end, tangent tail end, and pig tail end shapes.

According to the present invention having the above-described configuration, which can increase the production capacity of nanopowders up to several to several tens of times through supply of the wire, which is supplied in the straight line shape in the related art, in a helical spring structure.

## BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a diagram illustrating a process of producing nanopowders using electrical wire explosion according to an embodiment of the present invention;
FIG. 2 is a diagram illustrating a process of producing nanopowders using electrical wire explosion according to another embodiment of the present invention;
FIG. 3 is a schematic diagram of an apparatus for producing nanopowders using electrical wire explosion according to an embodiment of the present invention; and
FIG. 4 is a diagram illustrating the shape of a wire according to an embodiment of the present invention.
FIG. 5 is a graph showing the production capacity of nanopowders according to the change of the diameter and pitch of the spring per unit volume of the wire.

## DETAILED DESCRIPTION OF THE PREFERRED EMBODIMENT

Hereinafter, preferred embodiments of the present invention will be described in detail with reference to the accompanying drawings.

Further, the terms as will be discussed later are defined in accordance with the functions of the present invention, but may be varied under the intention or regulation of a user or operator. Therefore, they should be defined on the basis of the whole scope of the present invention.

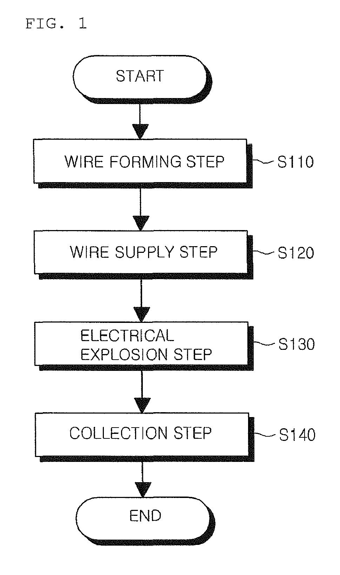

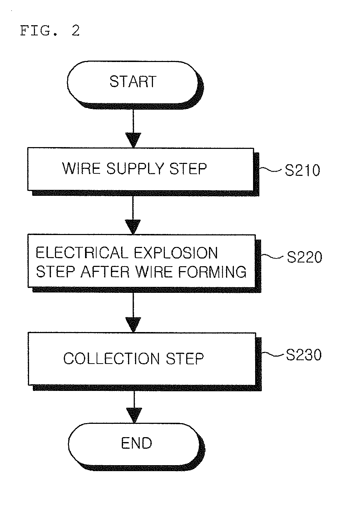

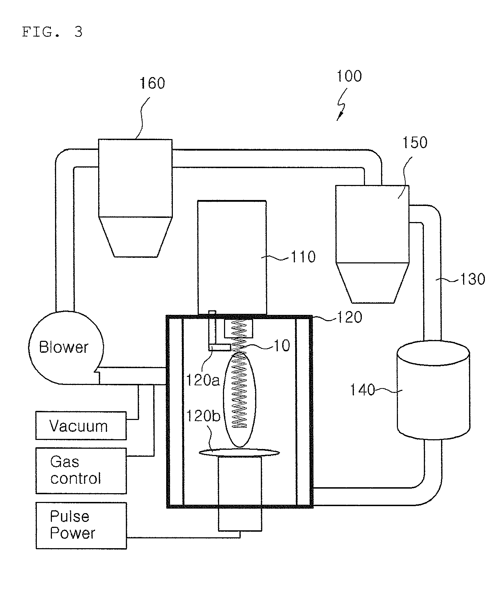

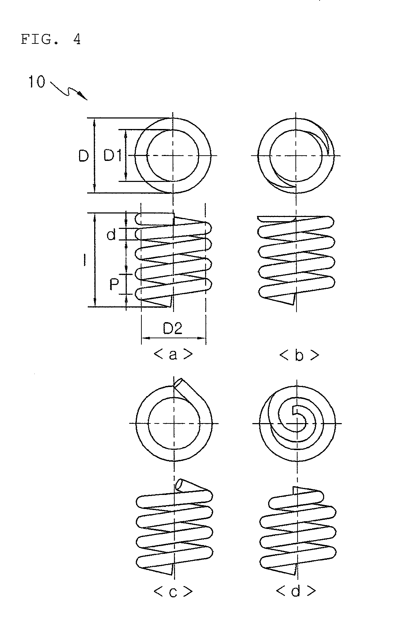

FIG. 1 is a diagram illustrating a process of producing nanopowders using electrical wire explosion according to an embodiment of the present invention, and FIG. 2 is a diagram illustrating a process of producing nanopowders using electrical wire explosion according to another embodiment of the present invention. FIG. 3 is a schematic diagram of an apparatus for producing nanopowders using electrical wire explosion according to an embodiment of the present invention, and FIG. 4 is a diagram illustrating the shape of a wire according to an embodiment of the present invention.

Referring to FIGS. 1 to 4, a method for producing nanopowders using electrical wire explosion includes a forming step (S110), a supply step (S120), an electrical explosion step (S130), and a collection step (S140).

As illustrated in FIG. 3, an apparatus 100 that is used to perform the method for producing nanopowders using electrical wire explosion according to an embodiment of the present invention is a general apparatus which includes a wire supplier 110, a chamber 120 having a ground electrode 120a and a high-voltage electrode 120b provided therein, a nanopowder transport line 130, a buffer trap 140, a cyclone 150, and a mesh filter 160, and the detailed explanation of the apparatus will be omitted.

In the forming step (S110), a wire 10 is formed in a helical spring structure, and it is preferable that the wire 10 formed in a helical spring structure has a pitch of 0.4 to 0.8 mm, a number of wind of 10 to 13, and a diameter of 1 to 2 mm.

Further, an end portion of the wire 10 that is formed in a helical spring structure may be formed in any one of (a) close end, (b) open end, (c) tangent tail end, and (d) pig tail end shapes.

The supply step (S120) is to supply the wire 10 that is formed in a helical spring structure in the forming step (S110) to the supplier 110.

The electrical explosion step (S130) is to generate nanopowders through electrical explosion of the wire, to which high voltage is applied, after the wire 10 that is supplied to the supplier 110 is supplied into the chamber 120.

Here, if the material of the wire 10 is copper (Cu), necessary energy and voltage are obtained by the following equation.

In this case, the diameter d and the length 1 of the wire 10 is 0.4 mm and 80 mm, and sublimation energy $W_s$ of copper (Cu) is 47.8J/mm$^3$.

[Equation 1]

$$W_s = V \times w_s = \frac{\pi d^2}{4} \times l \times w_s$$

Here, $W_s$ is sublimation energy J of an injected unit volume wire, $w_s$ is inherent sublimation energy of a material (J/mm$^3$), d is a wire diameter (mm), and 1 is a wire length (mm).
By writing actual conditions in the above-described equation, the sublimation energy Ws becomes as follows.

$$W_s = \frac{\pi (0.4mm)^2}{4} \times 80mm \times 47.8 J/mm^3 = 480.5 J$$

That is, by injecting energy into the wire as high as 480.5J, the wire can be sublimated by the corresponding length. However, in order to produce nanopowders using the electrical explosion method, which is the primary purpose of the present invention, it is necessary to increase the energy that is injected into the wire, and in this case, it is necessary to provide a value of which the degree can be expressed. Accordingly, by introducing an index of a value K, $W_s$ and K have the following relationship.
Here, K is defined as overheat of a wire material, or a super heating factor.

[Equation 2]

$$K = \frac{W}{W_s}$$

Here, W is energy J that is injected from a pulse power supply portion to the wire when the explosion is made once.
By mathematically expressing the value K, it becomes the ratio of energy that is injected from the pulse power supply portion to the wire through Equation 2 to the sublimation energy. If K is "1", it may be considered that the energy that is injected from the pulse power supply portion has been used to sublimate the wire only. However, since the primary purpose of the electrical wire explosion is to produce nanopowders, it is advantageous to form powders of a nano size as the value K is larger than "1". Experimentally, if the value K becomes equal to or larger than "2", it is possible to produce nanopowders in the 100-nm class, and thus Equation 2 can be expressed as Equation 3 below.

[Equation 3]

$$W = K \times W_s = 2 \times 480.5 = 961.0 (J)$$

Accordingly, if K is K=2, the energy that is injected from the pulse power supply portion to the wire becomes 961.0 J. On the other hand, when the energy is actually injected into the wire through a circuit and a cable, a loss of about 15% occurs, and in consideration of this, excessive energy should be injected. This value U is expressed in Equation 4 below.

[Equation 4]

$$U = \frac{W}{\eta}$$

Here, U is energy (J) of the pulse power supply portion in consideration of a loss, and $\eta$ is efficiency (85%) of the circuit and the high-voltage cable.

Since W is 961.0 J, the value U becomes as follows.

$$U = \frac{W}{\eta} = \frac{961.0}{0.85} = 1130.6 \, (J)$$

In order to inject energy as high as 1130.6 J as described above, necessary voltage V can be expressed by Equation 5 below.

[Equation 5]

$$U = \frac{C \times V^2}{2}$$

Here, V is a voltage (kV) for applying the injected energy, and C is a condenser capacitance ($\mu$F).

Using Equation 5 as described above, the necessary voltage is obtained as follows.

$$V = \sqrt{\frac{2 \times U}{C}} = \sqrt{\frac{2 \times 1130.6}{7}} \fallingdotseq 19.4 \, (kV)$$

Finally, a voltage that is necessary to produce nanopowders on a condition that the value K is "2" with a copper (Cu) wire having a diameter of 0.4 mm and a length of 80 mm becomes 19.4 kV.

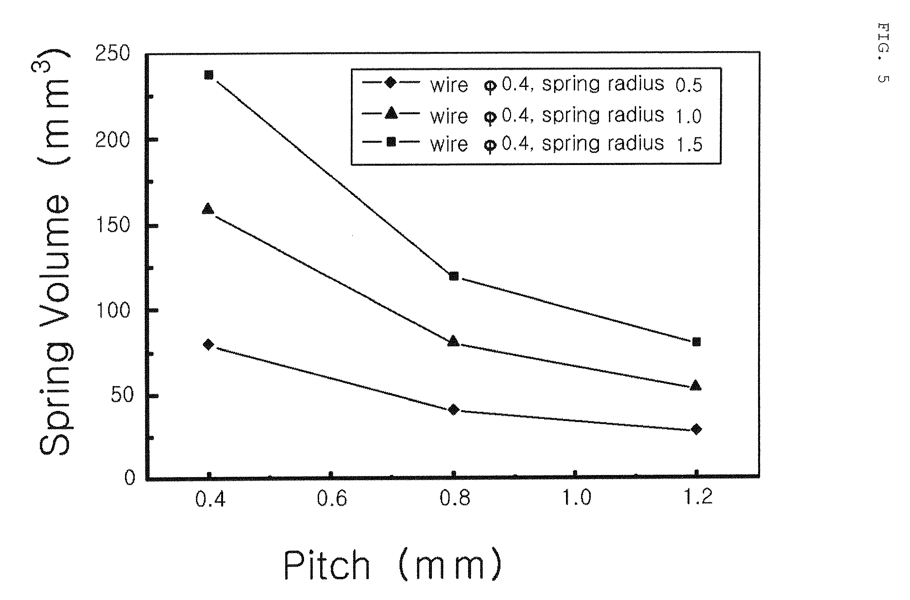

Using the voltage obtained through the above-described equation, the production capacity of nanopowders according to the change of the diameter and pitch of the spring per unit volume of the wire 10 is shown in FIG. 5.

As shown in FIG. 5, it can be known that the production capacity of nanopowders according to the present invention becomes high as the diameter of the spring becomes large, and if the pitch of the spring is increased, the production capacity is decreased.

That is, by adjusting the diameter and pitch of the spring, even if the diameters of the wires are equal to each other, the production capacity of nanopowders can be easily increased several to several tens of times the production capacity of nanopowders in the related art.

The collection step (S140) is to collect nanopowders generated in the electrical explosion step (S130).

On the other hand, FIG. 2 is a diagram illustrating a process of producing nanopowders using electrical wire explosion according to another embodiment of the present invention. The method for producing nanopowders using electrical wire explosion according to another embodiment of the present invention as illustrated in FIG. 2 is almost the same as that of the one embodiment of the present invention as illustrated in FIG. 1, except that a wire 10 is supplied to a supplier 110 in a supply step (S210), the wire 10 supplied to the supplier 110 is formed in a helical spring structure, and then the formed wire 10 is supplied into a chamber 120, and thus the duplicate explanation thereof will be omitted.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

**Claims**

1. A method for producing nanopowders using electrical wire explosion comprising:

   forming a wire in a helical spring structure;
   supplying the formed wire to a supplier;
   electrically exploring the wire through applying high voltage to the wire after supplying the wire that is supplied to the supplier into a chamber; and
   collecting nanopowders generated through explosion of the wire,
   wherein the wire formed in a helical spring structure has a pitch of 0.4 to 0.8 mm, a number of wind of 10 to 13, and a diameter of 1 to 2 mm.

2. A method for producing nanopowders using electrical wire explosion comprising:

   supplying a wire to a supplier;
   forming the wire that is supplied to the supplier in a helical spring structure, supplying the formed wire into a chamber, and electrically exploring the wire through applying of high voltage to the formed wire after supplying the wire that is supplied to the supplier into a chamber; and
   collecting nanopowders generated through explosion of the wire,
   wherein the wire formed in a helical spring structure has a pitch of 0.4 to 0.8 mm, a number of wind of 10 to 13, and a diameter of 1 to 2 mm.

3. The method for producing nanopowders according to claim 1, wherein an end portion of the wire that is formed in a helical spring structure is formed in any one of close end, open end, tangent tail end, and pig tail end shapes.

4. The method for producing nanopowders according to claim 2, wherein an end portion of the wire that is formed in a helical spring structure is formed in any one of close end, open end, tangent tail end, and pig tail end shapes.

FIG. 1

```
        ┌─────────────┐
        │    START    │
        └──────┬──────┘
               │
               ▼
   ┌──────────────────────┐
   │  WIRE FORMING STEP    │──── S110
   └──────────┬───────────┘
              │
              ▼
   ┌──────────────────────┐
   │   WIRE SUPPLY STEP    │──── S120
   └──────────┬───────────┘
              │
              ▼
   ┌──────────────────────┐
   │      ELECTRICAL       │──── S130
   │   EXPLOSION STEP      │
   └──────────┬───────────┘
              │
              ▼
   ┌──────────────────────┐
   │   COLLECTION STEP     │──── S140
   └──────────┬───────────┘
              │
              ▼
        ┌─────────────┐
        │     END     │
        └─────────────┘
```

FIG. 2

START

WIRE SUPPLY STEP — S210

ELECTRICAL EXPLOSION STEP AFTER WIRE FORMING — S220

COLLECTION STEP — S230

END

FIG. 3

FIG. 4

FIG. 5

**EUROPEAN SEARCH REPORT**

Europäisches
Patentamt

European
Patent Office

Office européen
des brevets

Application Number

EP 14 18 9896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 517172 A (SERVER CO LTD) 11 June 2002 (2002-06-11) * abstract * * figure 1 * ----- | 1-4 | INV. B22F1/00 B22F9/14 |
| A | CN 101 607 315 A (ZHIPING WANG [CN] ZHIPING WANG) 23 December 2009 (2009-12-23) * the whole document * ----- | 1-4 | |

TECHNICAL FIELDS
SEARCHED      (IPC)

B22F

The present search report has been drawn up for all claims

| Place of search | Date of completion of the search | Examiner |
|---|---|---|
| The Hague | 25 March 2015 | Forestier, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 14 18 9896

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2015

| Patent document cited in search report | Publication date | Patent family member(s) | | Publication date |
|---|---|---|---|---|
| JP 2002517172    A | 11-06-2002 | JP | 2002517172  A | 11-06-2002 |
| | | WO | 9217303  A1 | 15-10-1992 |
| CN 101607315    A | 23-12-2009 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130142502

- WO 100394390 A